# EUROPEAN PATENT APPLICATION

(11) **EP 4 819 558 A1**
(43) Date of publication of application: **07.10.2026**
(21) Application number: 26167698.5
(22) Date of filing: 25.03.2026
(51) Int. Cl.: H04L 27/38, H04B 7/0413, H04L 1/00, H04L 25/03, H04L 25/06, H04W 84/12

(54) **EFFICIENT SOFT DEMAPPING FOR MULTI ANTENNA COMMUNICATION SYSTEMS EMPLOYING UNEQUAL QAM**

(30) Priority: 31.03.2025 US 202563780802 P; 23.07.2025 US 202519277652
(71) Applicant: Avago Technologies International Sales Pte. Limited, Singapore 768923 (SG)
(72) Inventor: Pulikkoonattu, Rethnakaran, Irvine, 92618 (US)
(74) Representative: Dilg, Haeusler, Schindelmann Patentanwaltsgesellschaft mbH

(57) **Abstract**

In some implementations, a device may one or more processors. The one or more processors may be configured to perform soft demapping using sphere decoding in multiple input multiple output (MIMO) systems and using different modulation sizes in unequal quadrature amplitude modulation (QAM) across a plurality of spatial streams.

## Description

### Field of the Disclosure

This disclosure generally relates to systems and methods for soft demapping using sphere decoding in multiple input multiple output (MIMO) systems supporting different quadrature amplitude modulation (QAM) across spatial streams.

### Background of the Disclosure

The development of low-complexity Multiple Input Multiple Output (MIMO) sphere demappers presents significant challenges, particularly in systems employing unequal Quadrature Amplitude Modulation (QAM) across different spatial streams. The modulation order on the stronger stream may be M, while the weaker stream may employ M1 (M1≠M, e.g., M1=M/2, M/4, M/8 or M/16) modulation orders. This disparity in modulation orders complicates the efficient demodulation and computation of LLR (log-likelihood ratio) values which makes it challenging to maintain performance and reliability in communication in wireless networks.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGS. 1B and 1C are block diagrams depicting computing devices useful in connection with the methods and systems described herein, according to some embodiments.
FIG. 2 is a block diagram of a MIMO mapping and demapping system.
FIG. 3 is a flowchart showing a process for demapping unequal QAM streams.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The entire contents of United States Patent 10,498,486 B1 filed August 23, 2018, and United States Patent 10,616,032 B2 filed August 23, 2018, are hereby incorporated by reference.

Various embodiments disclosed herein relate to a wireless device including a receiver configured to receive encoded data from another wireless device over a communication channel and one or more processors. The one or more processors may be configured to determine that the AP operates in the second frequency range. The one or more processors may be configured to receive a set of symbols from a plurality of spatial streams of the encoded data including a first stream and a second stream. The one or more processors may be configured to determine, based at least on a modulation size of one of the first stream or the second stream, normalized signal values associated with the set of symbols from the first stream and the second stream. The one or more processors may be configured determine log likelihood ratio (LLR) values of the first stream and the second stream using the normalized signal values.

In some implementations, the normalized signal values may comprise one or more normalized estimated signal values of a set of modulated symbols transmitted from the other wireless device.

In some implementations, the one or more processors may be further configured to determine one or more first log likelihood (LL) metrics associated with the first stream using the normalized signal values, and determine one or more second LL metrics associated with the second stream using the normalized signal values, wherein the LLR values of the first stream and the second stream are determined using the one or more first LL metrics and the one or more second LL metrics, respectively.

In some implementations, the one or more first LL metrics may be determined using a modulation size of the first stream or the one or more second LL metrics may be determined using a modulation size of the second stream

In some implementations, the one or more processors may be further configured to generate a look-up table (LUT) including one or more slicing errors of the normalized signal values, wherein at least the one or more first LL metrics or the one or more second LL metrics are determined using the LUT.

In some implementations, the one or more processors may be further configured to determine, based at least on modulation sizes of the first stream and the second stream and one or more characteristics of the communication channel, a stronger stream among the first stream and the second stream.

In some implementations, the one of the first stream and the second stream may be the stronger stream.

Embodiments of the present disclosure can provide systems and methods for demapping unequal QAM modulation schemes. For example, a transmitter in a MIMO system may include a plurality of transmit antennas. In some examples, the transmit antennas may use different QAM modulation schemes (e.g., 4-QAM, 16-QAM, and/or the like) for different spatial streams. The modulation schemes may be associated with a modulation size constellation. As an example, a 4-QAM modulation scheme may be associated with a constellation including four points. In some examples, unequal QAM modulation schemes introduce challenges in normalization, decoding, and signal processing due to differing constellation densities, which complicate joint demodulation, LLR computation, and stream alignment in MIMO systems. The term unequal QAM may refer to a quadrature amplitude modulation (QAM) scheme with a stronger stream and a weaker stream, or any modulation scheme with two or more streams with unequal strength (e.g., different power levels, signal-to-noise ratios, and/or the like. The present disclosure provides systems and methods for normalizing received signal values according to a stronger of two signals and determining log likelihood ratio (LLR) values of the streams based on the normalized values. As a result, the present disclosure may enable more efficient and accurate demodulation of spatial streams with differing modulation schemes. Additionally, the present disclosure provides systems and methods for executing sphere decoding for a weaker of two streams. A weaker stream, often the one using a lower-order modulation scheme, may be associated with greater inaccuracies due to reduced signal strength, increased noise susceptibility, and less reliable channel conditions, all of which can degrade the precision of symbol estimation and soft-output decoding. The weaker stream may therefore be associated with worse performance than the stronger stream in an unequal QAM setup. The described systems and methods can help counteract the effects of weak signal conditions of a weaker signal in an unequal QAM setup, thereby enhancing the demapping performance.

Standards within IEEE 802.11bn allow MIMO systems to have various unequal QAM setups. For example, configurations with two, three, or four streams with unequal QAM modulation schemes may be set up. In an example where M is represents a set of QAM sizes (e.g., M=64, 256, 1024, and 4096), an index may be included in the configuration ID that indicates a relationship between the unequal QAM setups. As an example, for a setup with two unequal QAM modulation schemes, an index of 0 may indicate a first stream with a M-QAM modulation scheme and a second stream with an (M/4)-QAM modulation scheme (e.g., 4096-QAM and 1024-QAM). As another example, an index of 1 may indicate a first stream with a M-QAM modulation scheme and a second stream with an (M/16)-QAM modulation scheme (e.g., 4096-QAM and 256-QAM). In these examples, the coding rate may be the same for all modulation schemes.

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of sphere-based demapping techniques for MIMO systems with unequal QAM across spatial streams.

### A. Computing and Network Environment

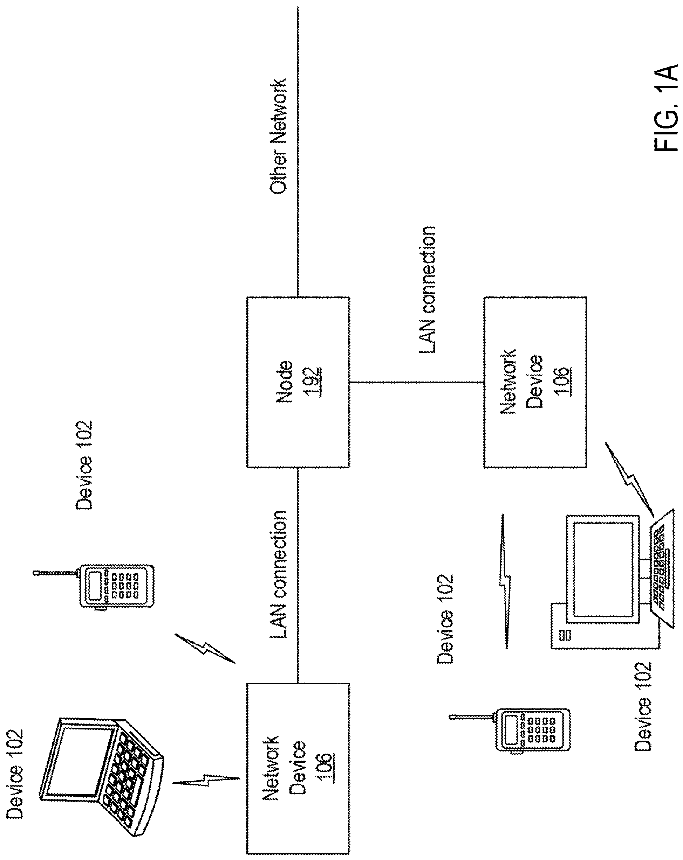

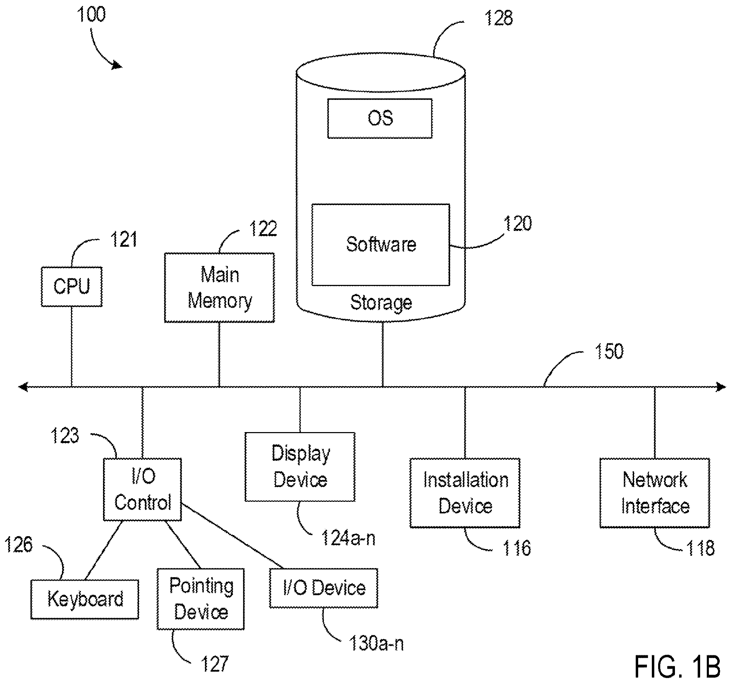

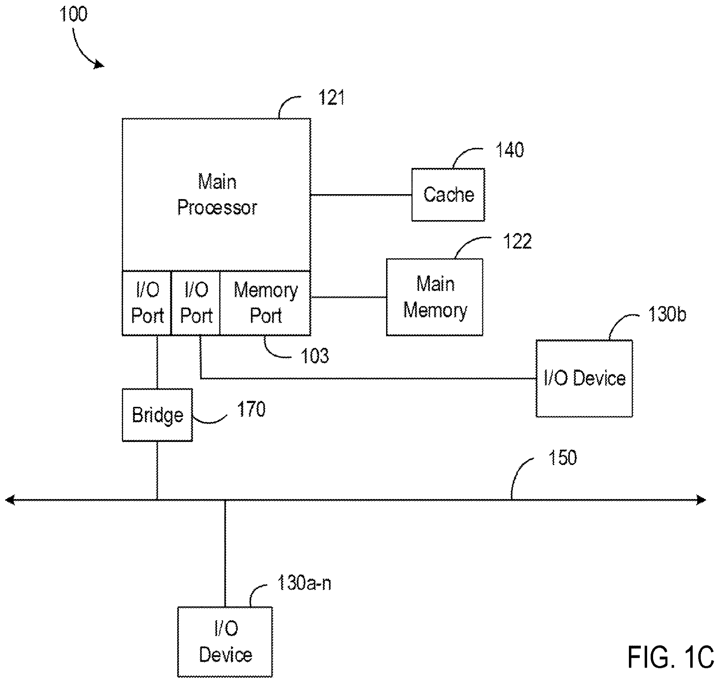

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above-described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a Micro Channel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, track pads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a Fibre Channel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. SOFT DEMAPPING FOR MULTI ANTENNA COMMUNICATION SYSTEMS EMPLOYING UNEQUAL QAM

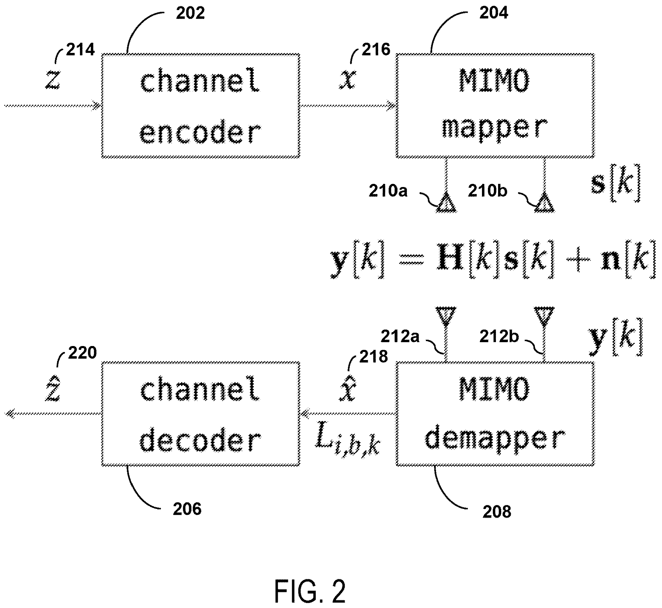

FIG. 2 is a block diagram of a MIMO mapping and demapping system. For example, a transmitter of a MIMO system including channel encoder 202 and MIMO mapper 204 may encode input data 214 to generate encoded data 216. Using transmitter antennas 210a and 210b, the transmitter may transmit the encoded data 216 to a receiver of the MIMO system including MIMO demapper 208 and channel decoder 206. MIMO demapper can map a received signal to demapped encoded data 218. The demapped encoded data 218 can then be decoded to generate decoded data 220.

In some implementations, input data 214 may be encoded by channel encoder 202. For example, channel encoder 202 may transform input data 214 into a coded format that enhances the confidentiality of the information during transmission, reduces errors in demapping data, and/or improves transmission efficiency by representing the input data 214 with a more compact message. Input data 214 can be encoded according to various schemes, such as such as convolutional coding, low-density parity-check (LDPC) coding, and/or the like. After encoded data 216 has been mapped and demapped as part of the transmission process, channel decoder 206 can decode demapped encoded data 218 according to the scheme it was encoded by to generate decoded data 220. In a case with no mapping or decoding errors, encoded data 216 and decoded data 220 may represent the same information.

In some implementations, MIMO mapper 204 may map encoded data 216 onto multiple spatial streams. As an example, as part of modulating encoded data 216 into a waveform for transmission (e.g., "s[k]"), MIMO mapper 204 may map encoded data 216 onto a first spatial stream associated with antenna 210a and a second spatial stream associated with antenna 210b. The two spatial streams may represent independently modulated data paths. Splitting encoded data 216 between the two spatial streams may allow the transmitter to transmit more data simultaneously, which can reduce transmission latency. In some examples, MIMO mapper 204 may modulate encoded data 216 according to different modulation schemes with different modulation sizes for antennas 210a and 210b. For example, two different quadrature amplitude modulation (QAM) schemes may be used. As an example, one antenna may transmit data modulated with a 256-QAM scheme associated with a constellation that has 256 constellation points (e.g., modulation size of 256) and the other may transmit data modulated with a 64-QAM scheme associated with a constellation that has 64 constellation points.

In some implementations, MIMO demapper 208 may receive a waveform signal transmitted by MIMO mapper 204. For example, MIMO demapper may receive a waveform signal (e.g., "y[k]") equal to the transmitted signal (e.g., "s[k]") multiplied by the gain of the respective antenna (e.g., "H[k]") with random noise (e.g., "n[k]"). Each of antenna 210a and 210b may have a different gain. In an example, the gain of the antenna may be a characteristic of the communication channel associated with the antenna. In an example, antenna 212a may be configured to receive a waveform signal from antenna 210a representing a portion of encoded data 216 and antenna 212b may be configured to receive a waveform signal from antenna 210b representing a separate portion of encoded data 216. These transmissions may represent two spatial streams (e.g., a first between antenna 210a and 212a and a second between antenna 210b and 212b). In an example, one of the streams may be stronger than the other. For example, because the first stream may be associated with a higher modulation size, antenna 210a may be configured with a higher gain (e.g., "H[k]") than antenna 210b. Modulation sizes with more constellation points may be more vulnerable to noise, and may therefore be configured with higher gain for transmission. This may cause the first stream to be stronger than the second stream.

In some implementations, MIMO demapper 208 may map the waveform signal received from MIMO mapper 204 to a set of constellation points associated with the modulation schemes of the first and second spatial streams. For example, MIMO demapper 208 may calculate LLR values indicating a probability that a received portion of the waveform represents a 0 or a 1.

In an example, MIMO demapper 208 may perform QR decomposition on a received signal. In an example, "Y" may represent a received signal matrix based on a channel matrix "H" (e.g., gain and phase effects), a transmitted signal vector "S", and a noise vector "u." In this example, MIMO demapper 208 may perform QR decomposition using unitary matrix "Q" and upper triangular matrix "R." $\begin{matrix}Y = HS + u \\ {{=}^{︷}}^{{QQ}^{H} = I} QRS + u \\ {{{Q}^{H} Y}_{︸}}_{≜ {Y}^{˜}} = RS + {{{Q}^{H} u}_{︸}}_{= {u}^{˜}} \\ {Y}^{˜} = RS + {u}^{˜}\end{matrix}$ Equation 1: qr decomposition

The QR decomposition may simplify LLR calculations. For example, the demapper can exploit the triangular structure of "R" to perform efficient back-substitution, which can simplify the LLR calculations. For example, LLR values may be generated according to the equations below. $\begin{matrix}{L}_{i , b}^{det} = log \frac{P \left({x}_{i , b}=0\left|{y}^{˜}, R\right.\right)}{P \left({x}_{i , b}=1\left|y, R\right.\right)} \\ {{=}^{︷}}^{\left(Bayes\right)} log {\sum }_{s ∈ {X}_{i , b}^{0}} p \left({y}^{˜}\left|s, R\right.\right) P \left(s\right) - log {\sum }_{s ∈ {X}_{i , b}^{1}} p \left({y}^{˜}\left|s, R\right.\right) P \left(s\right) \\ {{\approx }^{︷}}^{max - log} {min}_{s ∈ {X}_{i , b}^{1}} {{\left\{\frac{1}{{N}_{0}}{\left‖{y}^{˜}-Rs\right‖}^{2}-log P\left(s\right)\right\}}_{︸}}_{≜ d \left(s\right)} - {min}_{s ∈ {X}_{i , b}^{0}} \left\{\frac{1}{{N}_{0}}{\left‖{y}^{˜}-Rs\right‖}^{2}-log P\left(s\right)\right\}\end{matrix}$ Equation 2: llr value generation In Equation 2, " ${L}_{i , b}^{det}$" may represent an LLR value for the bit "b" of symbol "i." MIMO demapper 208 can use the "max-log" approximation to determine the set of LLR values based on the *ỹ* generated from QR decomposition. This may be less computationally expensive than computing a full Maximum A Posteriori (MAP) expression (e.g., using the "Bayes" equation shown in Equation 2). The "max-log" approximation may be referred to as the Jacobian logarithm expansion, and can generally map ln(exp(a)+exp(b)) = max(a,b) + ln(1+exp(-|a-b|)) for a given "a" and "b." This approximation can simplify the computation of the full MAP expression function by approximating log-sum-exp operations with minimum and/or maximum operations, which can significantly reduce computational resources used to evaluate LLR values while maintaining an acceptable level of accuracy.

In some implementations, the different gains of the first and second stream may affect energy levels of symbols determined by MIMO demapper 208 from the stream. For example, symbols associated with the first stream may have higher energy levels than the second stream, since the first stream is stronger. This energy imbalance may lead to biased symbol estimates, where the MIMO demapper 208 overemphasizes the stronger stream and underestimates the weaker one, potentially degrading the accuracy of soft-output decoding and overall system performance. In these examples, MIMO demapper 208 may normalize the first and second stream according to a modulation size of the stronger stream. This may reduce bias and improve the reliability of soft decisions across unequal QAM configurations. The term stronger stream may refer to a data stream transmitted with higher energy relative to another stream in an unequal QAM setup, or any stream with greater signal strength compared to at least one other sharing the same communication channel. The term weaker stream may refer to a data stream transmitted with lower energy relative to another stream in an unequal QAM setup, or any stream with lower signal strength compared to at least one other sharing the same communication channel.

In some implementations, MIMO demapper 208 may use sphere decoding to demap received signals. The term sphere decoding may refer to decoding using sphere mapping, or any search-based demapping technique that restricts the candidate symbol vectors to those lying within a hypersphere centered around an initial estimate. The term sphere mapping may refer to any geometric constraint process of projecting candidate symbol vectors onto a hypersphere centered around an initial estimate. For example, MIMO demapper 208 may generate a center (e.g., based on a stream) and a predefined number of points around the stream. MIMO demapper 208 can then evaluate the Euclidean distances between the received signal and each candidate point within the sphere to compute soft metrics, such as log-likelihood ratios (LLRs), for each bit position. In some examples, MIMO demapper 208 may balance unequal QAM signals by using sphere decoding on one of the streams. For example, a weaker stream may be decoded using sphere decoding and a stronger stream may be decoded using simpler (e.g., less computationally expensive) methods, such as lookup tables with slicing logic. By decoding a weaker stream with sphere decoding, MIMO demapper 208 may compensate for the disadvantage of the weaker signal while balancing computational resources used to demap data. As a result, MIMO demapper 208 can improve the overall reliability of demapped encoded data 218.

In some implementations, MIMO demapper 208 can determine which stream to use for sphere decoding based on the strength and modulation size of each stream. For example, MIMO demapper 208 may determine the stronger stream based on evaluating a sound-to-noise ratio (SNR) of each stream. In response to determining that the SNR of the first stream is higher, MIMO demapper 208 can determine that the first stream is stronger. MIMO demapper 208 can then determine a flag value based on whether the stronger stream has the higher modulation size. For example, in response to determining that the first stream has a higher modulation size, MIMO demapper 208 may set a flag flip value to 0. The flag flip value may be an indicator used by MIMO demapper to determine which spatial stream undergoes sphere decoding. Alternatively, in response to determining that the second stream has a higher strength (e.g., but lower modulation size), MIMO demapper 208 can set the flag flip value to 1. The flag flip value may determine which sphere is focused on for sphere decoding. For example, in a case where the flag flip value is 0, the MIMO demapper may use sphere decoding on the weaker stream (e.g., the second stream). This may be reliable, since the stronger stream can be decoded with simpler methods since it benefits from higher strength. As another example, in a case where flag flip value is 1, the MIMO demapper may also use sphere decoding on the weaker stream (e.g., the first stream), which can be reliable since the stronger stream (e.g., the second stream) benefits from higher strength in this case. Adaptively switching the demapping based on strength and modulation may ensure better numerical stability (e.g., more accurate LLRs) by focusing sphere decoding on the stream with higher modulation when it is not the stronger stream. In some examples, the flag flip value may also affect how QR triangularization is applied. For example, an upper triangular "R" matrix may be applied based on the flag flip value being set to 0. Alternatively, a lower triangular "R" matrix may be applied when the flag flip value is set to 1.

In some examples, MIMO demapper 208 can set the flag flip value to 0 in response to determining that the first stream is stronger and has a higher modulation size. The first stream may be received as "S₁" by antenna 212a and normalized to generate a first normalized received signal "*Ý*₁". Similarly, the second stream may be received as S₂ by antenna 212b and normalized to generate "*Ý*₂". MIMO demapper 208 may then generate estimates of the symbols "*Ŝ*₁" and "*Ŝ*₂" by applying soft interference cancellation and weighted combining based on channel coefficients (e.g., "R") and noise variance ("n" and "*σ*"). The term symbol may refer to a certain constellation point in a modulation scheme, or any discrete signal unit used to represent information in digital communication systems. In the equation, "K" may represent a scaling factor that may normalize the energy of the symbols. For example, a scaling factor "K" may be determined according to the stronger stream (e.g., the first stream). This scaling factor may be applied to the received signals to generate symbol estimates with consistent energy across streams. This may improve the accuracy of soft-output detection by aligning the energy levels of symbols from the first and second stream. $\begin{matrix}{\dot{Y}}_{1} = {S}_{1} + {R}_{1 , 2} {S}_{2} + {n}_{1} \\ = {R}_{1 , 2} {S}_{2} + {S}_{1} + {n}_{1} \\ {\dot{Y}}_{2} = {R}_{2 , 2} {S}_{2} + {n}_{2} \\ {\hat{S}}_{2} = \frac{{R}_{1 , 2}^{∗} {\dot{Y}}_{1} + \left({σ}_{1}^{2}+{K}_{{QAM}_{1}}^{2}\right) {R}_{2 , 2}^{∗} {\dot{Y}}_{2}}{{\left|{R}_{1 , 2}\right|}^{2} + \left({σ}_{1}^{2}+{K}_{{QAM}_{1}}^{2}\right) {\left|{R}_{2 , 2}\right|}^{2}} \\ {\hat{S}}_{1} = \left[\left({\dot{Y}}_{1}-{R}_{1 , 2}{\hat{S}}_{2}\right)\right]\end{matrix}$ Equation 1: symbol estimation for first and second stream for flag_flip=0

In some examples, MIMO demapper 208 can determine whether the second stream is stronger than the first stream, using the following inequality: $\frac{{K}_{{QAM}_{1}}^{2}}{{K}_{{QAM}_{2}}^{2}} < {\left|{R}_{1 , 2}\right|}^{2} + {\left|{R}_{2 , 2}\right|}^{2}$ Inequality 1. determination of stronger stream between first and second stream

For unequal QAM across spatial streams, when Inequality 1 is satisfied, MIMO demapper 208 can determine that the second stream is stronger than the first stream.

In some implementations, MIMO demapper 208 may generate LLR values based on the estimated symbols. For example, MIMO demapper 208 may generate LLR values according to the following equations. $\begin{matrix}{L}_{i = 1 , b}^{\left(1\right)} = {min}_{{s}_{2} ∈ X \left({M}_{2}\geq 49\right)} \left\{\left\{{\left|Y{\dot{Y}}_{2}-{R}_{2 , 2}{S}_{2}\right|}^{2}\right\}\right. \\ + \left\{\begin{matrix}{ϵ}_{Δ}^{2} + {LUT}_{Δ}^{\left(1\right)} \left(b, \left⌈\frac{{\hat{S}}_{1}^{ℜ} + \sqrt{{M}_{1}}}{Δ}\right⌉\right) + {\left|{\hat{S}}_{1}^{ℑ}-{\hat{S}}_{1}^{ℑ}\right|}^{2} , b ∈ \left[0,{q}_{1}-1\right] \\ {ϵ}_{Δ}^{2} + {LUT}_{Δ}^{\left(1\right)} \left(b, \left⌈\frac{{\hat{S}}_{1}^{ℑ} + \sqrt{{M}_{1}}}{Δ}\right⌉\right) + {\left|{\hat{S}}_{1}^{ℜ}-{\hat{S}}_{1}^{ℜ}\right|}^{2} , b ∈ \left[{q}_{1},2{q}_{1}-1\right]\end{matrix}\right\} \\ {L}_{i = 1 , b}^{\left(0\right)} = {min}_{{s}_{2} ∈ X \left({M}_{2}\geq 49\right)} \left\{\left\{{\left|{\dot{Y}}_{2}-{R}_{2 , 2}{S}_{2}\right|}^{2}\right\}\right. \\ + \left\{\begin{matrix}{ϵ}_{Δ}^{2} + {LUT}_{Δ}^{\left(0\right)} \left(b, \left⌈\frac{{\hat{S}}_{1}^{ℜ} + \sqrt{{M}_{1}}}{Δ}\right⌉\right) + {\left|{\hat{S}}_{1}^{ℑ}-{\hat{S}}_{1}^{ℑ}\right|}^{2} , b ∈ \left[0,{q}_{1}-1\right] \\ {ϵ}_{Δ}^{2} + {LUT}_{Δ}^{\left(0\right)} \left(b, \left⌈\frac{{\hat{S}}_{1}^{ℑ} + \sqrt{{M}_{1}}}{Δ}\right⌉\right) + {\left|{\hat{S}}_{1}^{ℜ}-{\hat{S}}_{1}^{ℜ}\right|}^{2} , b ∈ \left[{q}_{1},2{q}_{1}-1\right]\end{matrix}\right\} \\ {L}_{i = 2 , b}^{\left(0\right)} = {min}_{{s}_{2} ∈ {X}_{b}^{0} X \left(\frac{{M}_{2} \geq 49}{2}\right)} {\left|{\hat{S}}_{1}-{\hat{S}}_{1}\right|}^{2} + {\left|{\dot{Y}}_{2}-{R}_{2 , 2}{S}_{2}\right|}^{2} , b ∈ \left[0,2{q}_{2}-1\right] \\ {L}_{i = 2 , b}^{\left(1\right)} = {min}_{{s}_{2} ∈ {X}_{b}^{1} X \left(\frac{{M}_{2} \geq 49}{2}\right)} {\left|{\hat{S}}_{1}-{\hat{S}}_{1}\right|}^{2} + {\left|{\dot{Y}}_{2}-{R}_{2 , 2}{S}_{2}\right|}^{2} , b ∈ \left[0,2{q}_{2}-1\right] \\ {L}_{i = 1 , b} = {L}_{i = 1 , b}^{\left(1\right)} - {L}_{i = 1 , b}^{\left(0\right)} \\ {L}_{i = 2 , b} = {L}_{i = 2 , b}^{\left(1\right)} - {L}_{i = 2 , b}^{\left(0\right)}\end{matrix}$ Equation 4: llr value generation flag_flip=0 In these equations "*s*₂ ∈ *X*(*M*₂ ≥ 49)" may represent a sphere search over the second stream. In an example maximum ratio combining (MRC) may be used to calculate a center of the sphere. The center may act as a starting point of a search. A set number of points can then be generated around the center (e.g., using a sphere point generator (SPGEN)). Each point of the sphere may represent candidate symbol vectors made up of constellation points. As a result of generating the sphere, MIMO demapper 208 can demap symbols associated with both the first modulation scheme (e.g., of the first stream) and the second modulation scheme (e.g., of the second stream) at once. As represented in Equation 4, 49 points are generated. However, any number of points may be selected (e.g., to reduce complexity or improve accuracy). MIMO detector can then evaluate the closest point to a symbol. In this example, "*q*₁ - 1" may represent a first half of the LLR bits and "2*q*₁ - 1" may represent a second half of the LLR bits. In this example, "*M*₁" may be the first stream QAM size and "*q*₁" and "*q*₂" may be constellation indexes for the first and second streams, respectively. The term constellation index may refer to a number of bits per symbol in a digital modulation scheme, or any numerical label within a modulation scheme indicating the position of symbols within the associated constellation diagram. In an example, *q*₁ = .5 _{*} *log*₂*M*₁. Similarly, *q*₂ = .5 * *log*₂*M*₂*.*

In some implementations, MIMO demapper 208 may use a lookup table (LUT). For example, the MIMO demapper 208 can user the LUT to determine LLR values for the stronger stream (e.g., the first stream). This may consume less network resources than sphere mapping, but may be less accurate. The lookup table can include slicing errors. Slicing errors may represent the difference between an actual received signal and a nearest constellation point. In an example, normalized signals (e.g., *Ŝ*₁ when the flag flip value is set to 0) may be categorized into an LLR value based on which slice they fall into within the LUT. MIMO demapper 208 may store slicing errors associated with typical values that can be received in the LUT. MIMO demapper 208 may then retrieve the precomputed error values when generating LLR values to reduce real-time computational load. In an example, the LUT may account for normalization factors (e.g., K) and/or channel scaling (e.g., from QR decomposition). In an example, there may be separate LUTs for separate modulation schemes. For example, there may be a first LUT for the first modulation scheme and a second LUT for the second modulation scheme.

In some examples, MIMO demapper 208 can set the flag flip value to 1 in response to determining that the higher modulation size stream is not the strongest stream. For example, MIMO demapper 208 can set the flag flip value to 1 in response to determining that the second stream is stronger and the first stream has a higher modulation size. This may result in QR decomposition being executed with a lower triangular (e.g., "L") matrix instead of an upper triangular (e.g., "R") matrix. For example, when the flag flip value is set to 1, "*Ŝ*₁" and " *Ŝ*₂" can be determined according to the following equations. In these equations, QAM₂ may represent the modulation size of the second stream. $\begin{matrix}{{Y}^{⌣}}_{2} = {S}_{1} + {L}_{2 , 1} {S}_{1} + {n}_{1} \\ = {L}_{2 , 1} {S}_{1} + {S}_{2} + {n}_{2} \\ {{Y}^{⌣}}_{1} = {L}_{1 , 1} {S}_{1} + {n}_{1} \\ {\hat{S}}_{1} = \frac{{L}_{2 , 1}^{∗} {{Y}^{⌣}}_{2} + \left({σ}_{2}^{2}+{K}_{{QAM}_{2}}^{2}\right) {L}_{1 , 1}^{∗} {{Y}^{⌣}}_{1}}{{\left|{L}_{2 , 1}\right|}^{2} + \left({σ}_{2}^{2}+{K}_{{QAM}_{2}}^{2}\right) {\left|{L}_{1 , 1}\right|}^{2}} \\ {\hat{S}}_{2} = \left[\left({{Y}^{⌣}}_{2}-{L}_{2 , 1}{\hat{S}}_{1}\right)\right]\end{matrix}$ Equation 5: symbol estimated for first and second streams for flag_flip=1

Similar to equation 4, LLR values can then be generated based on "S^_1" and " S^_2." For example, MIMO demapper 208 can generate a sphere with a center determined by MRC and 49 points generated by SPGEN. MIMO demapper 208 can then execute a sphere search over the first stream. $\begin{matrix}{L}_{i = 2 , b}^{\left(1\right)} = {min}_{{s}_{1} ∈ X \left({M}_{1}\geq 49\right)} \left\{\left\{{\left|{{Y}^{⌣}}_{1}-{L}_{1 , 1}{S}_{1}\right|}^{2}\right\}\right. \\ + \left\{\begin{matrix}{∈}_{Δ}^{2} + {LUT}_{Δ}^{\left(1\right)} \left(b, \left⌈\frac{{\hat{S}}_{2}^{ℜ} + \sqrt{{M}_{2}}}{Δ}\right⌉\right) + {\left|{\hat{S}}_{2}^{ℑ}-{\hat{S}}_{2}^{ℑ}\right|}^{2} , b ∈ \left[0,{q}_{2}-1\right] \\ {∈}_{Δ}^{2} + {LUT}_{Δ}^{\left(1\right)} \left(b, \left⌈\frac{{\hat{S}}_{2}^{ℑ} + \sqrt{{M}_{1}}}{Δ}\right⌉\right) + {\left|{\hat{S}}_{1}^{ℜ}-{\hat{S}}_{1}^{ℜ}\right|}^{2} , b ∈ \left[{q}_{2},2{q}_{2}-1\right]\end{matrix}\right\} \\ {L}_{i = 2 , b}^{\left(0\right)} = {min}_{{s}_{1} ∈ X \left({M}_{1}\geq 49\right)} \left\{\left\{{\left|{{Y}^{⌣}}_{1}-{L}_{1 , 1}{S}_{1}\right|}^{2}\right\}\right. \\ + \left\{\begin{matrix}{∈}_{Δ}^{2} + {LUT}_{Δ}^{\left(0\right)} \left(b, \left⌈\frac{{\hat{S}}_{2}^{ℜ} + \sqrt{{M}_{2}}}{Δ}\right⌉\right) + {\left|{\hat{S}}_{2}^{ℑ}-{\hat{S}}_{2}^{ℑ}\right|}^{2} , b ∈ \left[0,{q}_{2}-1\right] \\ {∈}_{Δ}^{2} + {LUT}_{Δ}^{\left(0\right)} \left(b, \left⌈\frac{{\hat{S}}_{2}^{ℑ} + \sqrt{{M}_{1}}}{Δ}\right⌉\right) + {\left|{\hat{S}}_{1}^{ℜ}-{\hat{S}}_{1}^{ℜ}\right|}^{2} , b ∈ \left[{q}_{2},2{q}_{2}-1\right]\end{matrix}\right\} \\ {L}_{i = 1 , b}^{\left(0\right)} = {min}_{{s}_{1} ∈ {X}_{b}^{0} X \left(\frac{{M}_{1} \geq 49}{2}\right)} {\left|{\hat{S}}_{2}-{\hat{S}}_{2}\right|}^{2} + {\left|{\dot{Y}}_{1}-{L}_{1 , 1}{S}_{1}\right|}^{2} , b ∈ \left[0,2{q}_{1}-1\right] \\ {L}_{i = 1 , b}^{\left(1\right)} = {min}_{{s}_{1} ∈ {X}_{b}^{1} X \left(\frac{{M}_{1} \geq 49}{2}\right)} {\left|{\hat{S}}_{2}-{\hat{S}}_{2}\right|}^{2} + {\left|{\dot{Y}}_{1}-{L}_{1 , 1}{S}_{1}\right|}^{2} , b ∈ \left[0,2{q}_{1}-1\right] \\ {L}_{i = 1 , b} = {L}_{i = 1 , b}^{\left(1\right)} - {L}_{i = 1 , b}^{\left(0\right)} \\ {L}_{i = 2 , b} = {L}_{i = 2 , b}^{\left(1\right)} - {L}_{i = 2 , b}^{\left(0\right)}\end{matrix}$ Equation 6: llr value generation flag_flip=0

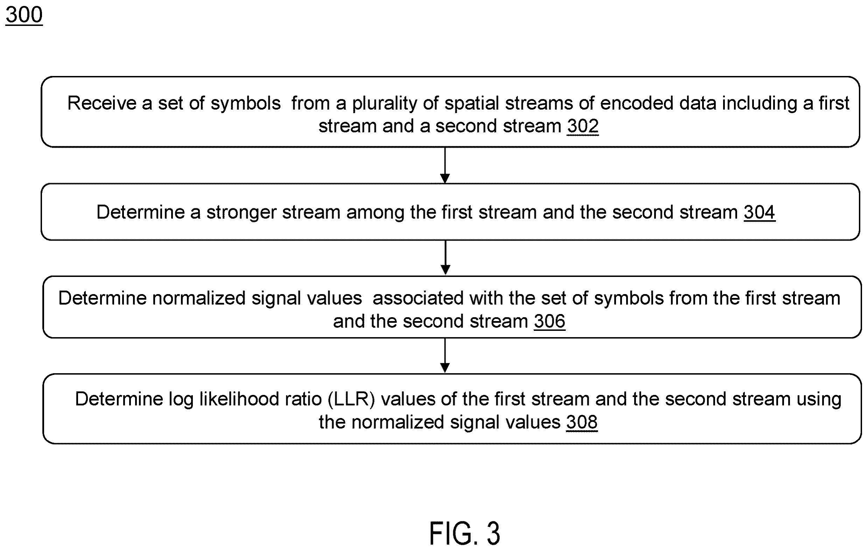

FIG. 3 is a flowchart showing a process 300 for demapping unequal QAM streams. In some implementations, the process 300 is performed by one or more processors (e.g., main processor 121, and/or the like) or circuitry of a wireless device. In other embodiments, the process 300 includes more, fewer, or different steps than shown in FIG. 3. In some embodiments, the one or more processors are configured to perform soft demapping using sphere decoding in multiple input multiple output (MIMO) systems supporting unequal quadrature amplitude modulation (QAM) across a plurality of spatial streams.

In some embodiments, the circuitry is configured to perform soft demapping using a search involving a subset of constellation points in MIMO systems supporting unequal QAM across a plurality of spatial streams. The term MIMO may refer to any wireless communication technique that utilizes multiple transmitting and receiving antennas. The term soft demapping may refer to generating bit probabilities through log-likelihood ratios (LLR), or any process of converting received modulated symbols into probabilistic bit metrics. The term search may refer to any computational process for determining a most likely transmitted symbol. The subset of constellation points may be dynamically chosen based on channel conditions, such as signal-to-noise ratio (SNR), fading characteristics, or interference levels. In an example, this selective search can reduce computational complexity of soft demapping.

In some embodiments, the described systems and methods may be executed on an equal QAM configuration with a plurality of spatial streams of equal (e.g., or near equal) strength. For example, the first stream and the second stream may be equally strong. In such configurations, the modulation order for each stream may be identical (e.g., M1 = M2 = M), which can simplify the demapping process. The described systems and methods may retain high performance and efficiency when applied to equal QAM configurations.

At step 302, the processors may receive a set of symbols from a plurality of spatial streams of encoded data including a first stream and a second stream. For example, the wireless device may include a receiver configured to receive encoded data from another wireless device over a communication channel. The term wireless device refers to a smartphone, tablet, laptop, or any circuitry or device that enables communication over a wireless network without the use of physical connectors. The term receiver refers to a radio receiver, Wi-Fi receiver, or any circuitry or device that is configured to detect, decode, and process incoming signals or data transmissions. The term communication channel refers to a cellular link, Wi-Fi link, or any medium that enables the transmission of signals or data wirelessly between a wireless device and another device or network node. The term encoded data refers to compressed data, encrypted data, formatted data, or any signal that represents information transformed into a specific structure for transmission, storage, or processing. The term spatial stream refers to a data path, signal layer, antenna stream, or any signal that carries encoded data separately from other streams in a wireless system using multiple antennas (e.g., MIMO system).

In an example, the communication channel may be associated with a plurality of spatial streams. The spatial streams may each correspond to an antenna of the receiver, where the receiver is part of a MIMO system and therefore includes multiple antennas. The encoded data may represent a set of symbols. For example, the plurality of spatial streams can include at least a first stream and second stream that represent the set of symbols as encoded data. The term set of symbols refers to a group of characters, codewords, signal elements, or any circuitry or data structure that represents encoded information for transmission, processing, or interpretation. The set of symbols may be the output of a demodulator (e.g., MIMO demapper 208 of FIG. 2). For example, in response to receiving the first and second stream, the processors of the wireless device may demodulate the received encoded data to generate the set of symbols.

At step 304, the processors may determine a stronger stream among the first stream and the second stream. For example, the stronger stream may be determined based on modulation sizes of the first stream and/or one or more characteristics of the communication channel. The term modulation size refers to the number of distinct symbols, the bit capacity per symbol, the modulation order, or any other indication of the number of signal states used to encode digital information for transmission. In some examples, a quadrature amplitude modulation (QAM) scheme may convey data by modulating the amplitude of two carrier waves. In these examples, the modulation size may represent how many distinct symbols are used. In some examples, the communication channel can be associated with characteristics such as bandwidth, noise, capacity, error rate, and/or the like. As an example, a stronger stream can be determined based on a signal-to-noise ratio measured for each of the first and second stream. Either the first stream or the second stream may be the stronger stream.

At step 306, the processors may determine normalized signal values associated with the set of symbols from the first stream and the second stream. For example, the processors may determine normalized signal values based at least on a modulation size of the stronger stream. A modulation size may indicate a number of distinct symbols in encoded data. In an example, each symbol may correspond to a unique constellation point of a constellation that represents the possible symbols of a modulation scheme as points in a two-dimensional plane. In this example, each constellation point may correspond to a unique combination of amplitude and phase used to encode data. The modulation size of the stronger stream can be used to define a reference constellation associated with constellation points that are normalized. The processors may apply a normalization factor to scale received symbols from the first and second streams such that average symbol energy is consistent. As an example, the stronger stream may be scaled according to a normalization factor that adjusts the constellation points such that the average symbol energy is consistent, enabling uniform processing across streams with different modulation orders. In this example, the weaker stream may be scaled relative to the stronger stream (e.g., using the same normalization factor). This relative scaling may allow both streams to be processed within a common reference framework. The term normalized signal values refers to scaled symbol amplitudes, adjusted constellation coordinates, or any indication of received symbols that represents the symbols with consistent average energy. For example, normalized signal values may represent symbols with consistent average energy across various modulation sizes.

In some embodiments, the normalized signal values may be an estimate. For example, the normalized signal values may include one or more normalized estimated signal values of a set of modulated symbols. The set of modulated symbols may be transmitted from the other device. In an example, there may be noise on the communication channel. As a result, the wireless device may estimate what a received signal was intended to be. As an example, the wireless device may use channel estimation and demodulation techniques to infer the most likely transmitted symbol. The wireless device may then apply a normalization factor to scale the estimated symbol to a consistent energy level. The term normalized estimated signal value refers to any normalized representation of a signal value determined as an estimation of the most likely transmitted symbol.

At step 308, the processors may determine log likelihood ratio (LLR) values of the first stream and the second stream using the normalized signal values. For example, the processors may determine a set of LLR values representing a decoded message based on the normalized signal values. The term log likelihood ratio (LLR) values refers to soft-decision metrics, probabilistic bit estimates, confidence-weighted decoding inputs, or any set of probabilities that indicate whether a transmitted bit is a 0 or a 1 based on received signal values. In an example, the LLR values may be generated by evaluating the probability of each bit being a 0 or a 1 based on the position of normalized signal values relative to constellation points in the modulation scheme. As a result of normalizing both the first and the second stream according to the modulation size of the stronger stream, the LLR values can be computed using a consistent energy reference. This may enable reliable soft-decision decoding across streams with different modulation sizes (e.g., unequal QAM constellations).

In some embodiments, the processors may determine log likelihood (LL) metrics of the streams. For example, the processors may determine first LL metrics associated with the first stream and second LL metrics associated with the second stream using the normalized signal values. The term LL metrics may refer to LLR values determined via various methods, such as sphere demapping or a lookup table (LUT). For example, the LL metrics may be generated according to a flag flip value. In this example, the flag flip value may be determined based on signal strength and/or modulation size. In some examples, the flag flip value may indicate how LL metrics are determined for each of the first and second stream. For example, the flag flip value may determine which stream is demapped using sphere demapping and which stream is demapped using a lookup table (LUT).

In some embodiments, the LL metrics may be determined using modulation sizes. For example, spacing between constellation points may depend on modulation size of an associated modulation scheme. A modulation scheme with more bits per symbol may have a denser constellation (e.g., less space in between constellation points). In an example, this may affect the LL metrics. For example, smaller spacing between constellation points in higher modulation sizes may lead to smaller differences in distances (e.g., Euclidean distances) between candidate symbols. This may affect how LL metrics are generated, either by an LUT or sphere demapping. As an example, this may affect how constellation points associated with the modulation size are mapped to points of a sphere. As another example, the modulation size may affect how slices are determined in the LUT table.

In some embodiments, the LL metrics may be determined using a look-up table (LUT). For example, the processors may generate a LUT that includes one or more slicing errors of the normalized signal values. The term LUT refers to a precomputed data array, a memory-based mapping structure, a reference index, or any data structure that maps predefined values to reduce processing complexity in signal processing or decoding operations. The term slicing error refers to a symbol estimation deviation, demodulation discrepancy, distance based mismatch, or any other mismatch between the normalized signal value and the nearest constellation point. In some examples, at least the one or more first LL metrics or the one or more second LL metrics can be determined using the LUT. For example, the processors may determine LL metrics for a stronger stream using the LUT and a weaker stream using sphere demapping. The processors may retrieve precomputed slicing errors from the LUT to evaluate distance-cost functions associated with candidate constellation points. This may decrease computing time and/or increase efficiency involved in generating the LL metrics.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A method, comprising:
performing soft demapping using sphere decoding in multiple input multiple output, MIMO, systems and using different modulation sizes in unequal quadrature amplitude modulation, QAM, across a plurality of spatial streams.

2. The method of claim 1, further comprising:
receiving, by a receiver, encoded data from another wireless device over a communication channel;
receiving, by one or more processors, a set of symbols from the plurality of spatial streams of the encoded data including a first stream and a second stream;
determining, by the one or more processors, based at least on a modulation size of one of the first stream or the second stream, normalized signal values associated with the set of symbols from the first stream and the second stream; and
determining, by the one or more processors, log likelihood ratio, LLR, values of the first stream and the second stream using the normalized signal values.

3. The method of claim 2, wherein
the normalized signal values comprise one or more normalized estimated signal values of a set of modulated symbols transmitted from the other wireless device.

4. The method of claim 2 or 3, further comprising:
determining one or more first log likelihood, LL, metrics associated with the first stream using the normalized signal values; and
determining one or more second LL metrics associated with the second stream using the normalized signal values,
wherein the LLR values of the first stream and the second stream are determined using the one or more first LL metrics and the one or more second LL metrics, respectively.

5. The method of claim 4, wherein
the one or more first LL metrics are determined using a modulation size of the first stream, or
the one or more second LL metrics are determined using a modulation size of the second stream.

6. The method of claim 4 or 5, further comprising:
generating a look-up table, LUT, including one or more slicing errors of the normalized signal values,
wherein at least the one or more first LL metrics or the one or more second LL metrics are determined using the LUT.

7. The method of any one of the claims 2 to 6, further comprising:
determining, based at least on modulation sizes of the first stream and the second stream and one or more characteristics of the communication channel, a stronger stream among the first stream and the second stream,
wherein the one of the first stream and the second stream is the stronger stream.

8. A wireless device, comprising:
one or more processors configured to perform and/or to control a method as set forth in claim 1.

9. The wireless device of claim 8, further comprising:
a receiver configured to receive encoded data from another wireless device over a communication channel,
wherein the wireless device is configured to perform and/or to control a method a method as set forth in any one of the preceding claims 2 to 7.

10. A wireless device, comprising:
circuitry configured to perform soft demapping using a search involving a subset of constellation points in multiple input multiple output, MIMO, systems and using different modulation sizes in unequal quadrature amplitude modulation, QAM, across a plurality of spatial streams.

11. The wireless device of claim 10, wherein the circuitry is configured to:
receive, from another wireless device over a communication channel, a set of symbols from the plurality of spatial streams of encoded data including a first stream and a second stream;
determine, based at least on modulation sizes of the first stream and the second stream and one or more characteristics of the communication channel, a stronger stream among the first stream and the second stream;
determine, based at least on a modulation size of the stronger stream, normalized signal values associated with the set of symbols from the first stream and the second stream; and
determine log likelihood ratio, LLR, values of the first stream and the second stream using the normalized signal values.

12. The wireless device of claim 11, wherein
the normalized signal values comprise one or more normalized estimated signal values of a set of modulated symbols transmitted from the other wireless device.

13. The wireless device of claim 11 or 12, wherein the circuitry is further configured to:
determine one or more first log likelihood, LL, metrics associated with the first stream using the normalized signal values; and
determine one or more second LL metrics associated with the second stream using the normalized signal values,
wherein the LLR values of the first stream and the second stream are determined using the one or more first LL metrics and the one or more second LL metrics, respectively.

14. The wireless device of claim 13, wherein
the one or more first LL metrics are determined using a modulation size of the first stream, or
the one or more second LL metrics are determined using a modulation size of the second stream.

15. The wireless device of claim 13 or 14, wherein the circuitry is further configured to:
generate a look-up table, LUT, including one or more slicing errors of the normalized signal values,
wherein at least the one or more first LL metrics or the one or more second LL metrics are determined using the LUT,
wherein the LUT is generated before the set of symbols are received from the other wireless device.
